# NEUE EUROPÄISCHE PATENTSCHRIFT

(11) **EP 2 012 703 B2**
(45) Veröffentlichungstag und Bekanntmachung des Hinweises auf die Entscheidung über den Einspruch: **28.02.2018**
(45) Hinweis auf die Patenterteilung: 16.07.2014
(21) Anmeldenummer: 07722367.5
(22) Anmeldetag: 04.05.2007
(51) Int. Cl.: A61C 8/00, A61C 13/00, A61K 6/04

(54) **ENOSSALES IMPLANTAT MIT ANATASBESCHICHTUNG**
ENOSSAL IMPLANT COMPRISING AN ANATASE COATING
IMPLANT INTRA-OSSEUX À REVÊTEMENT ANATASE

(30) Priorität: 04.05.2006 DE 102006021968
(43) Veröffentlichungstag der Anmeldung: 14.01.2009
(73) Patentinhaber: Scholz, Alexander, 53507 Dernau (DE)
(72) Erfinder: GEIS-GERSTORFER, Jürgen, 72131 Ofterdingen (DE); FRICKE, Martin, 99091 Erfurt (DE)
(74) Vertreter: Freischem & Partner Patentanwälte mbB
(86) Internationale Anmeldenummer: PCT/DE2007/000813
(87) Internationale Veröffentlichungsnummer: WO 2007/128285

(56) Entgegenhaltungen:
- EP-A- 1 598 028
- EP-A1- 1 652 963
- WO-A-03/045268
- WO-A-2005/055860
- WO-A1-03/045268
- WO-A1-2005/055860
- WO-A2-2006/043166
- WO-A2-2006/043166
- US-A- 5 188 800
- SHENG J ET AL: "LOW-TEMPERATURE FORMATION OF PHOTOCATALYTIC PT-ANATASE FILM BY MAGNETRON SPUTTERING", JOURNAL OF MATERIALS SCIENCE, SPRINGER NETHERLANDS, NL, vol. 34, no. 24, 15 December 1999 (1999-12-15), pages 6201-6206, XP000890597, ISSN: 0022-2461, DOI: 10.1023/A:1004794525997
- ZYWITZKI O. ET AL: 'Surface and Coatings Technology', Bd. 180-181, 01 März 2004, ELSEVIER BV, AMSTERDAM Seiten 538 - 543, XP002375831

## Beschreibung

Die Erfindung betrifft ein enossales Implantat gemäß dem Oberbegriff des Anspruchs 1 und ein Verfahren zu dessen Herstellung gemäß dem Oberbegriff des Anspruches 11, mit einem Basiskörper aus einem Basiswerkstoff, der einen Verankerungsbereich zur Verankerung im Knochen, einen Halsbereich und einen Aufbaubereich zur Aufnahme eines zu applizierenden Elementes, wie einem Abutment oder einer Kronen-, Brücken- oder Prothesenkonstruktion, aufweist und zumindest teilweise mit einer Oberflächenschicht aus Titandioxid überzogen ist.

Enossale Implantate (Dentalimplantate) werden seit mehr als zehn Jahren erfolgreich eingesetzt. Die überwiegende Anzahl der derzeit verwendeten enossalen Implantate besteht aus Titan, da Titan einen ausreichend niedrigen Elastizitätsmodul und eine hohe Festigkeit aufweist. Des Weiteren ist Titan als Implantatmaterial vielfach erprobt und hat sich in Langzeitstudien bewährt.

Auch lässt sich mit Titanimplantaten bei geeigneter Ausführung in der Regel eine gute Osseointegration (Verknöcherung) erzielen. Ob eine sichere Osseointegration gewährleistet werden kann, hängt hierbei wesentlich von der Art und den Eigenschaften der Implantatoberfläche ab.

Auf das Aufbauteil von enossalen Implantaten werden Prothetikelemente, wie etwa Brücken oder Kronen, in der Regel unter Zwischenlage von so genannten Abutments aufgeschraubt oder zementiert.

Ein derartiges Implantat ist beispielsweise aus der US-A-5 934 287 bekannt.

Gemäß dem zuvor erwähnten Dokument wird auf das Verankerungsteil eines aus Titan bestehenden Implantats eine Beschichtung durch einen hydrothermalen Prozess aufgebracht, wodurch eine verbesserte Osseointegration erzielt werden soll. Die Beschichtung weist hierzu eine Zwischenschicht aus Titandioxid und eine Oberflächenschicht aus Hydroxyapatit auf.

Aus der US-B-6 183 255 ist ein weiteres enossales Implantat aus Titan bekannt, dessen Außenfläche mit Titandioxid beschichtet ist, das eine kristalline Struktur aufweist, die eine Mischung aus Rutil mit Anatas und/oder Brookit aufweist.

Hierbei wird die Beschichtung durch ein nasschemisches Verfahren unter Verwendung von Natriumhydroxid appliziert.

Ein weiteres enossales Implantat ist aus der WO-A-2005 055 860 bekannt.

Zur Verbesserung der Osseointegration wird hierbei eine Oberflächenschicht aus Titandioxid verwendet, die aus kristallinem Titandioxid besteht, die überwiegend oder vollständig in der Modifikation Anatas vorliegen soll. Die Oberflächenschicht wird durch anodische Oxidation aufgetragen.

Obwohl die zuvor erwähnten bekannten enossalen Implantate teilweise zu einer verbesserten Osseointegration führen mögen, sind die Ergebnisse jedoch nach wie vor nicht zufrieden stellend.

Der Erfindung liegt somit die Aufgabe zugrunde, ein enossales Implantat und ein Verfahren zur Herstellung eines enossalen Implantates anzugeben, womit eine gute Biokompatibilität erreicht wird und eine möglichst gute Osseointegration erzielt werden kann.

Diese Aufgabe wird erfindungsgemäß durch ein enossales Implantat gelöst, welches die Merkmale des Anspruchs 1 aufweist. In Bezug auf das Verfahren wird die Aufgabe durch die Gesamtheit der Merkmale des Anspruchs 11 gelost. Vorgeschlagen wird ein enossales Implantat, mit einem Basiskörper aus einem Basiswerkstoff, der einen Verankerungsbereich zur Verankerung im Knochen, einen Halsbereich und einen Aufbaubereich zur Aufnahme eines zu applizierenden Elementes aufweist, wobei die Oberfläche des Verankerungsbereichs eine Zwischenschicht aus Reintitan aufweist und eine Oberflächenschicht aus Titandioxid aufweist, die vollständig aus der Modifikation Anatas besteht.

Bei einer entsprechenden Schichtqualität der Oberflächen mit Nanostrukturierung und einer Nanoporosität wird die Osseointegration verbessert, was vorteilhaft für die Implantation ist.

Es hat sich gezeigt, dass erfindungsgemäß durch eine Oberflächenschicht aus Titandioxid in der Modifikation von Anatas eine besonders gute Osseointegration erzielbar ist. Durch die Zwischenschicht aus Reintitan ergibt sich eine besonders gute Haftung der Oberflächenschicht auf dem Verankerungsbereich. Hierdurch ist weiterhin eine gute Haftung auf einem Basiswerkstoff aus Titan oder einer Titanlegierung sichergestellt und eine gute Verbindung mit der Oberflächenschicht aus Anatas bzw. Rutil.

Gemäß der Erfindung weist der Halsbereich eine andere Oberfläche als der Verankerungsbereich auf.

Auf diese Weise können die vorteilhaften Eigenschaften der Anatas-Oberflächenschicht im Verankerungsbereich, die eine gute Osseointegration unterstützt, mit einer möglichst bioinerten Eigenschaft im Halsbereich des Implantats kombiniert werden. Das Implantat soll nämlich im Halsbereich an der Durchtrittsstelle des Implantats durch die Mundschleimhaut eine möglichst dichte Anlagerung der Mundschleimhaut am Implantathals ermöglichen und den Durchtritt von Bakterien aus der Mundhöhle an den Kieferknochen vermeiden, da dies zu Entzündungen um das Implantat (Periimplantitis, Mukositis) führen könnte.

Hierzu kann etwa der Halsbereich unbeschichtet sein. Wenn das Basismaterial des Implantats Titan oder eine Titanlegierung ist, so ist die Oberfläche bekanntlich durch eine dünne Oberflächenschicht aus Titandioxid passiviert, was schon eine relativ gute Beständigkeit gewährleistet.

Gemäß einer weiteren bevorzugten Ausführung der Erfindung weist der Halsbereich eine Zwischenschicht aus Reintitan und eine Oberflächenschicht aus Titandioxid in der Modifikation Rutil auf.

Auf diese Weise ergibt sich eine besonders gute Beständigkeit im Bereich des Implantathalses, womit eine gute Anlagerung der Mundschleimhaut an die glatte Oberfläche des Implantathalses eine "Abdichtung" zwischen Mundraum und Kieferknochen ermöglicht. Das Risiko von Entzündungen um das Implantat wird minimiert. Durch die glatte Oberfläche des Implantathalses ist diese im sensiblen Bereich zwischen Implantathals und Mundschleimhaut leichter zu reinigen und verbessert die Mundhygiene. Die Rutil-Oberflächenschicht besitzt eine natürliche, geschlossene, glatte Oberfläche mit geringer Mikro-/Nano-Rauigkeit.

Gemäß einer weiteren Ausführung der Erfindung ist das Implantat im Aufbaubereich unbeschichtet.

Für die Applikation von Abutments, Kronen, Brücken oder anderen Prothesenbauteilen ist eine Beschichtung in der Regel nicht notwendig.

Gemäß einer weiteren Ausführung der Erfindung weist auch der Aufbaubereich eine Zwischenschicht aus Reintitan und eine Oberflächenschicht aus Titandioxid in der Modifikation Rutil auf.

Bei einer derartigen Ausführung ist der gesamte, nicht im Knochen verankerte Bereich des Implantats mit einer glatten, weitgehend bioinerten Schicht versehen, was auch bereits für die Einheilzeit von Vorteil ist, die in der Regel mehrere Monate betragen kann.

Gemäß einer weiteren Ausgestaltung der Erfindung ist der Basiswerkstoff Titan oder eine Titanlegierung.

Bei der Verwendung von Titan bzw. einer Titanlegierung als Basiswerkstoff ergibt sich eine besonders vorteilhafte Haftung zwischen Zwischenschicht und Oberflächenschicht, so dass sich ein besonders abriebfester Aufbau ergibt, der auch beim Einschrauben des Verankerungsteils in eine entsprechende Knochenbohrung gegen Abrieb ausreichend beständig ist.

Gemäß einer weiteren Ausgestaltung der Erfindung besteht der Basiswerkstoff aus einem Kunststoff oder aus einer Keramik, insbesondere aus einem Zirkonoxidwerkstoff oder aus einem Aluminiumoxidwerkstoff.

Insbesondere Implantate aus Zirkonoxidwerkstoff, die in der neueren Zeit in der Entwicklung sind, zeichnen sich durch eine sehr hohe mechanische und chemische Beständigkeit aus und weisen eine gute Bioverträglichkeit auf. Da es jedoch schwierig ist, bei Implantaten aus Zirkonoxidwerkstoff eine gute Osseointegration zu erzielen, lässt sich durch die Applikation der erfindungsgemäßen Zwischenschicht aus Titan und der Oberflächenschicht aus Anatas auch bei einem solchen Material eine gute Osseointegration erreichen.

Die Oberflächenschicht ist aus Anatas als photoaktivierbare Schicht ausgebildet.

Durch eine Photoaktivierung kann die Anatas-Oberfläche zeitlich begrenzt superhydrophil gemacht werden. Damit können durch Photoaktivierung der Anatas-Schicht unmittelbar vor der Implantation Initialeffekte an der Grenzfläche Implantat/Knochengewebe zur besseren und schnelleren Anlagerung von Knochengewebe an die Implantatoberfläche initiiert werden, so dass eine verbesserte Osseointegration erzielt wird.

Gemäß einer weiteren Ausgestaltung der Erfindung weist die Basisschicht eine Schichtdicke zwischen 10 nm und 2000 nm, vorzugsweise zwischen 100 und 1000 nm, besonders bevorzugt zwischen 200 und 500 nm auf.

Eine derartige Schichtdicke ist ausreichend, um eine gute Haftvermittlung zu gewährleisten. Im Falle der Bildung von Mikrorissen können diese bei einer solchen Dimensionierung von der Basisschicht sicher aufgefangen werden. Gemäß einer weiteren Ausgestaltung der Erfindung weist die Oberflächenschicht aus Anatas eine Schichtdicke zwischen 10 und 1000 nm, vorzugsweise zwischen 100 und 250 nm auf.

Da die Titandioxid-Keramikschicht aus Rutil oder Anatas per se spröde ist, wird durch eine solchermaßen dünn ausgestaltete Oberflächenschicht die Gefahr von Rissbildungen weitgehend reduziert. Andererseits ist die Schichtdicke ausreichend, um die gewünschten Eigenschaften zur Verbesserung der Osseointegration zu erzielen und um eine ausreichende Abriebfestigkeit beim Einschrauben in eine Knochenbohrung zu gewährleisten.

Gemäß einer weiteren Ausgestaltung der Erfindung weist die Oberflächenschicht aus Rutil eine Schichtdicke zwischen 10 und 1000 nm, vorzugsweise zwischen 100 und 250 nm auf.

Auch hierbei wird einerseits durch eine ausreichend dünne Schicht einer Rissbildung entgegengewirkt, während die Schicht andererseits ausreichend dick ist, um eine gute Beständigkeit zu gewährleisten.

Die Basisschicht und die Deckschicht sind als Sputterschichten ausgebildet.

Mit derartig aufgetragenen Schichten ergibt sich einerseits eine besonders gute Haftung und Reinheit. Andererseits lässt sich die Anatas-Schicht bzw. Rutil-Schicht in besonders hoher Reinheit auftragen. Außerdem ergibt sich eine nanokristalline Schicht, wodurch eine hohe Biokompatibilität erreicht wird.

Mit einem derartigen Herstellungsverfahren ergibt sich eine nanokristalline Anatas-Schicht auf der Oberfläche des Verankerungsbereiches. Diese Schicht weist eine biokompatible nanostrukturierte Oberfläche mit einer Nano-Rauigkeit und einer Nano-Porosität auf, die eine besonders gute Osseointegration ermöglicht. Auch weist eine solche Anatasschicht eine entkeimende Wirkung auf, was für die Implantation von Vorteil ist.

Vor dem Aufsputtern der Oberflächenschicht aus Anatas wird eine Zwischenschicht aus Reintitan aufgesputtert.

Hierdurch wird eine sichere Haftung der Oberflächenschicht gewährleistet. Auch werden Probleme, die durch Spannungsrisse entstehen können, vermieden. Schließlich ist eine solche Zwischenschicht aus Reintitan wichtig für die Ausbildung der aufgesputterten Antasschicht in ihrer vorteilhaften Oberflächenmorphologie.

Insgesamt ergibt sich durch die solchermaßen im Sputterprozess aufgetragenen Schichten eine für die Implantation vorteilhafte Schichtqualität der Oberflächenschicht mit Nanostrukturierung und einer Nanoporosität, was die Osseointegration verbessert.

In weiterer Ausgestaltung der Erfindung umfasst der Schritt des Plasmavorbehandelns eine Plasmaoberflächenreinigung und eine Plasmapolitur.

Auf diese Weise wird eine besonders gute Haftung der aufgesputterten Zwischenschicht aus Titan und der darauf aufgetragenen Anatas-Schicht gewährleistet.

In zusätzlicher Weiterbildung der Erfindung erfolgt ein Plasmavorbehandeln des Basiskörpers im Halsbereich.

Durch einen derartigen Auftrag einer Schicht aus Rutil auf den Halsbereich ergibt sich an der Durchtrittsstelle des Implantats durch die Mundschleimhaut eine glatte TitandioxidSchicht aus Rutil, die eine dichte Anlagerung der Mundschleimhaut an den Implantathals ermöglicht und den Durchtritt von Bakterien aus der Mundhöhle an den Kieferknochen vermindert. Somit kann die Gefahr von Entzündungen am Implantat (Periimplantitis, Mukositis) verringert werden. Durch die glatte Rutil-Oberfläche wird die Reinigung des Zahnimplantates unterstützt und das Implantat vor Korrosion geschützt.

Gemäß einer weiteren Ausgestaltung der Erfindung umfasst das Verfahren die zusätzlichen Schritte:
- Plasmavorbehandeln des Basiskörpers im Aufbaubereich;
- Sputtern einer Zwischenschicht aus Reintitan auf den Aufbaubereich und
- Sputtern einer Oberflächenschicht aus Rutil auf die Zwischenschicht im Aufbaubereich.

Auf diese Weise kann der gesamte nach der Implantation während der Einheilphase in der Mundhöhle liegende Bereich mit einer glatten, biokompatiblen Schicht versehen werden. So werden Komplikationen während der Einheilphase vermieden.

Gemäß einer weiteren Ausgestaltung der Erfindung werden die Schichten aus Titan und Titandioxid durch einen gepulsten, reaktiven Magnetronsputterprozess (Reactive Pulse Magnetron Sputtering PMS) aufgebracht, wie dies grundsätzlich aus der DE-A-10 2004 024 351 bzw. aus O. Zywitzki et al., "Structure and Properties of Crystalline Titanium Oxide Layers Deposited by Reactive Pulse Magnetron Sputtering", in Surface and Coatings Technology, 180-181 (2004) 538-543 bekannt ist.

Hieraus ergibtsich, dass die Verwendung eines derartigen Verfahrens zu besonders vorteilhaften Eigenschaften der Oberflächenschicht aus Anatas führt, die bei Aktivierung mit UV-Strahlung photokatalytisch aktivierbar ist.

Gemäß einerweiteren Ausgestaltung der Erfindung wird ein Basiskörper verwendet, der aus Titan oder einer

Titanlegierung, aus Kunststoff oder aus einer Keramik, insbesondere aus einem Zirkonoxidwerkstoff oder einem Aluminiumoxidwerkstoff, besteht.

Insbesondere wenn der Basiskörper aus Titan oder einer Titanlegierung besteht, ergibt sich eine besonders gute Haftung zwischen der Oberflächenschicht bzw. der Zwischenschicht und dem Basiskörper. In diesem Fall kann gegebenenfalls auch auf die Auftragung der Zwischenschicht aus Titan verzichtet werden, da deren Funktion von dem Titanbasiswerkstoff übernommen werden kann.

Darüber hinaus kann das erfindungsgemäße Verfahren auch unter Verwendung von anderen Implantat-Werkstoffen als Basiskörper durchgeführt werden. So kann beispielsweise die Oberfläche eines Keramikimplantates, das aus einem Zirkonoxidwerkstoff oder einem Aluminiumoxidwerkstoff besteht, also aus einem Material, das von Natur aus eher bioinert ist, durch das erfindungsgemäße Verfahren zu einer guten Osseointegration vorbereitet werden.

Es versteht sich, dass die vorstehend genannten Merkmale nicht nur in der jeweils angegebenen Kombination, sondern auch in anderen Kombinationen verwendbar sind, ohne den Rahmen der Erfindung zu verlassen.

Die Erfindung ist in den Ansprüchen definiert.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: eine Ansicht eines erfindungsgemäßen Implantates;
- Fig. 2: eine teilweise geschnittene Ansicht eines in ein Knochenbohrloch eingesetzten Implantates;
- Fig. 3: einen stark vergrößerten Ausschnitt einer Grenzfläche zwischen Knochen und Verankerungsbereich mit schematisch angedeuteter Nanorauigkeit;
- Fig. 4: einen stark vergrößerten Bereich einer Implantat-Oberfläche im Halsbereich mit glatter Oberfläche;
- Fig. 5.: einen vergrößerten Ausschnitt aus dem erfindungsgemäßen Implantat, aus dem der Schichtenaufbau im Verankerungsbereich hervorgeht;
- Fig. 6: einen vergrößerten Ausschnitt aus dem Implantat gemäß Fig. 1, aus dem der Schichtenaufbau im Halsbereich hervorgeht und
- Fig. 7: eine rasterelektronenmikroskopische Aufnahme einer Implantat-Oberfläche mit Anatas-Beschichtung.

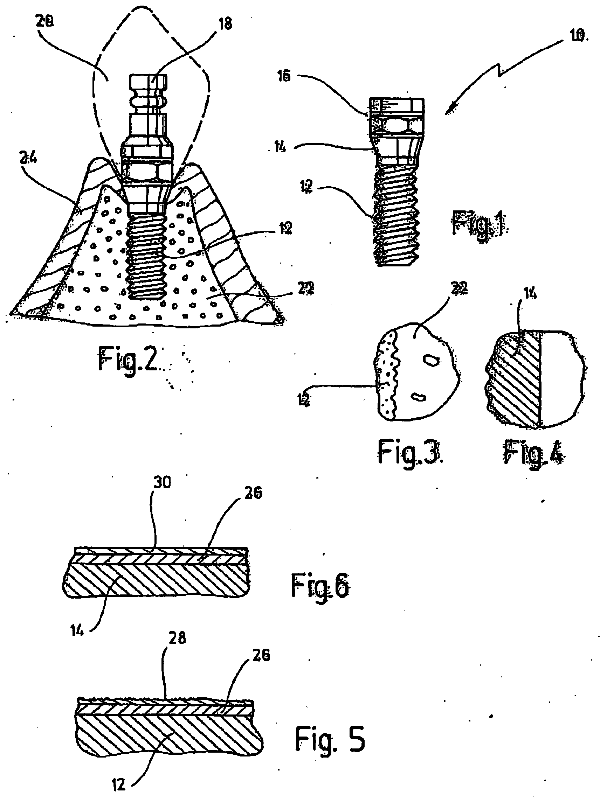

In Fig. 1 ist ein erfindungsgemäßes enossales Implantat insgesamt mit der Ziffer 10 bezeichnet. Das Implantat 10 weist einen Verankerungsbereich 12 auf, der zur Verankerung im Kieferknochen vorgesehen ist und der mit einem Gewinde versehen ist. An den Verankerungsbereich 12 schließt sich ein Halsbereich 14 an, der von einem Aufbaubereich 16 gefolgt ist. Der Aufbaubereich 16 ist zur Aufnahme eines zu applizierenden Elementes vorgesehen, wobei es sich etwa um ein Abutment, um eine Krone, um eine Brücke oder eine anderweitige Zahnrestauration handeln kann. Der Aufbaubereich 16 ist im vorliegenden Fall außen als Mutter ausgebildet, um bei der Implantation ein Eindrehen des Implantates 10 in einen Kieferknochen eines Patienten zu ermöglichen.

Der sich an den Verankerungsbereich 12 anschließende Halsbereich 14 erweitert sich konusförmig in Richtung zum Verankerungsbereich 16 hin und weist eine glatte Oberfläche auf, an die sich die Mundschleimhaut 24 eng anlegen kann.

Es versteht sich, dass das hier gezeigte Implantat 10 lediglich beispielhafter Natur ist und das Implantat beliebig geformt sein kann.

In der Regel wird jedoch der im Knochen zu verankernde Verankerungsbereich 12 mit einem Gewinde versehen sein und in diesem Fall ein irgendwie gearteter Ansatz für ein Schraubwerkzeug im Aufbaubereich 16 vorgesehen sein. Jedoch ist es auch denkbar, dass ein derartiger Ansatz für ein Schraubwerkzeug innenliegend ausgebildet ist, sofern auf das obere Ende des Implantats 10 beispielsweise ein zu applizierendes Aufbauteil mit einem Innengewinde eines vom Aufbaubereich hervorstehenden Hohlzylinders geschraubt wird. Weiterhin ist denkbar, dass der Verankerungsbereich 16 lediglich als Fortsatz des Halsbereiches 14 ausgebildet ist oder das dem Verankerungsbereich 12 abgewandte Ende des Halsbereiches 14 bildet.

Fig. 2 zeigt ein in einen Kieferknochen 22 eines Patienten implantiertes Implantat 10. In Fig. 2 ist schematisch angedeutet, wie eine Suprakonstruktion 18 mit einer Krone 20 auf dem Verankerungsbereich 16 appliziert sein kann. Dies erfolgt in der Regel unter Verwendung von Zahnzement.

Das erfindungsgemäße Implantat 10 weist eine spezielle Oberflächenbeschichtung auf, mit einer dünnen Oberflächenschicht aus Anatas im Verankerungsbereich 12 und einer dünnen Oberflächenschicht aus Rutil im Halsbereich 14. Zusätzlich kann auch der Verankerungsbereich 16 mit einer dünnen Oberflächenschicht aus Rutil versehen sein. Die Anatas-Schicht weist an ihrer Oberfläche eine natürliche Nanorauigkeit und Nanoporosität auf, was schematisch in Fig. 3 stark vergrößert dargestellt ist. So wird durch die Oberflächenrauigkeit der Anatas-Schicht eine enge Anlagerung von Knochengewebe ermöglicht und eine gute Osseointegration unterstützt. Dagegen ist der Halsbereich 14, wie schematisch in der stark vergrößerten Darstellung gemäß Fig. 4 gezeigt ist, mit einer glatten Oberflächenschicht aus Rutil versehen. So wird eine bioinerte Oberfläche gewährleistet, an die sich die Mundschleimhaut 24 eng anlegen kann, so dass im Halsbereich 14 eine "Abdichtung" zwischen Mundraum und Kieferknochen erreicht wird. Dadurch kann der Durchtritt von Bakterien aus der Mundhöhle in den Kieferknochen weitgehend vermieden werden. Das Risiko von Entzündungen um das Implantat (Periimplantitis, Mukositis) wird minimiert. Durch die glatte Oberfläche des Implantates 10 im Halsbereich 14 ist dieser im sensiblen Bereich zwischen Implantathals und Mundschleimhaut 24 leichter zu reinigen und verbessert die Mundhygiene.

In Fig. 5 ist der vorzugsweise verwendete Schichtenaufbau im Verankerungsbereich 12 schematisch vergrößert dargestellt.

Auf die Außenoberfläche des Verankerungsbereiches 12 ist eine dünne Zwischenschicht 26 aus Reintitan aufgesputtert, auf die wiederum eine dünne Oberflächenschicht 28 aus Anatas aufgesputtert ist. Die Zwischenschicht 26 aus Titan dient als Haftvermittler zwischen dem Basismaterial des Verankerungsbereiches 12 und der Oberflächenschicht 28 aus Anatas. Da die Oberflächenschicht 28 keramisch ist, ist diese relativ spröde und kann gegebenenfalls zur Mikrorissbildung neigen. Etwaige entstehende Mikrorisse der Oberflächenschicht 28 laufen maximal bis zur Zwischenschicht 26 und werden an dieser ausgeheilt.

In Fig. 6 ist der vorzugsweise verwendete Schichtenaufbau im Halsbereich 14 vergrößert dargestellt.

Auf die Außenoberfläche des Halsbereiches 14 ist eine dünne Zwischenschicht 26 aus Reintitan aufgesputtert, auf die wiederum eine dünne Oberflächenschicht 30 aus Rutil aufgesputtert ist. Die Zwischenschicht 26 aus Titan dient wiederum als Haftvermittler zwischen dem Basismaterial des Halsbereiches 14 und der Oberflächenschicht 30 aus Rutil.

Während die aus Anatas bestehende Oberflächenschicht 28 gemäß Fig. 5 eine Nanorauigkeit aufweist, die eine gute Osseointegration fördert, ist die Oberflächenschicht 30 aus Rutil im Halsbereich 14 sehr glatt und erlaubt eine dichte Anlagerung der Mundschleimhaut am Implantathals.

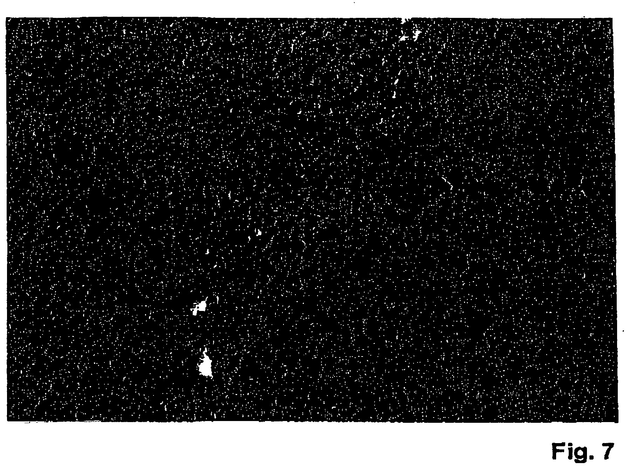

In Fig. 7 ist eine aus Anatas bestehende Oberflächenschicht 26 als rasterelektronenmikroskopische Aufnahme (SEM) dargestellt. Gut erkennbar ist die Nanorauigkeit und eine Nanoporosität. Beides trägt zu der vorteilhaften Osseointegration bei.

Die beschriebene Oberflächenbeschichtung wird erfindungsgemäß vorzugsweise durch einen gepulsten reaktiven Sputterprozess auf den Basiskörper, aus dem das Implantat 10 besteht, aufgetragen. Ein derartiger Sputterprozess ist grundsätzlich aus der DE-A-10 2004 024 351 sowie aus O. Zywitzki et al., "Structure and Properties of Crystalline Titanium Oxide Layers Deposited by Reactive Pulse Magnetron Sputtering", in Surface and Coatings Technology, 180-181 (2004) 538-543 bekannt.

Hierbei wird in einer Vakuumanlage gearbeitet, wodurch hochreine Schichten erzeugt werden können. Der anschließende Auftrag einer Anatas-Schicht oder einer Rutil-Schicht erfolgt unter Sauerstoffeinfluss, wobei durch Änderung der Prozessparameter entweder eine Anatas-Schicht oder eine Rutil-Schicht abgeschieden wird. Durch geeignete Einstellung der Prozessparameter lassen sich hochreine Anatas- bzw. Rutil-Schichten abscheiden.

Gemäß dem erfindungsgemäßen Verfahren wird zunächst in einem ersten Schritt unter Vakuum eine Plasmaoberflächenreinigung und Plasmapolitur des Basiskörpers vorgenommen.

In einem zweiten Schritt erfolgt ein Sputtern der Verbindungsschicht aus Reintitan.

Auf der Reintitan-Schicht erfolgt dann die Abscheidung einer Anatas-Schicht oder Rutil-Schicht durch Einstellung spezieller Prozessparameter unter Sauerstoffzufuhr beim Sputtern. Eine Anatas-Schicht wird vorzugsweise im Unipolarmodus abgeschieden, während eine Rutil-Schicht vorzugsweise im Bipolarmodus abgeschieden wird.

Die Schichtdicke der Reintitan-Schicht liegt zwischen 10 nm und 2000 nm, bevorzugt zwischen 200 und 500 nm.

Die Schichtdicke der Oberflächenschicht aus Anatas oder aus Rutil hängt von der mechanischen Beanspruchung ab und liegt in der Regel zwischen 10 und 1000 nm, vorzugsweise zwischen 100 und 250 nm. Die Schichtdicke wird hierbei wegen der tendenziell spröden Eigenschaften von Titandioxid so gering wie möglich gehalten und beträgt vorzugsweise nur etwa die Hälfte bis ein Drittel der Schichtdicke der Zwischenschicht aus Reintitan.

Der Basiswerkstoff, aus dem der Basiskörper des Implantats besteht, kann aus einem Metall, aus einer Keramik oder gegebenenfalls aus einem Kunststoff bestehen. Als Metall wird bevorzugt Titan bzw. eine Titanlegierung verwendet, dessen Biokompatibilität und gute Eignung für die Herstellung von enossalen Implantaten in Langzeitstudien nachgewiesen ist.

Besteht der Basiswerkstoff nicht aus Titan oder einer Titanlegierung, so ist die Auftragung der Zwischenschicht aus Reintitan wesentlich, um eine gute Haftung zum Basiskörper herzustellen und um die notwendige Elastizität gegenüber der relativ spröden Oberflächenschicht zu gewährleisten. Gleichfalls wesentlich ist die Verwendung einer Zwischenschicht aus Reintitan, um die vorteilhaften Eigenschaften der Anatasschicht mit Nanorauigkeit und Nanoporosität zu erhalten.

Als alternative Basiswerkstoffe kommen insbesondere keramische Basiswerkstoffe, wie etwa Zirkonoxidwerkstoffe oder Aluminiumoxidwerkstoffe, in Frage. Insbesondere Zirkon- oxidwerkstoffe, die in neuerer Zeit in Entwicklung sind, zeichnen sich durch eine besonders hohe mechanische Stabilität aus. Die notwendige Osseointegration wird hierbei durch die erfindungsgemäßen Oberflächenschichten gewährleistet.

Die durch den gepulsten reaktiven Magnetronsputterprozess hergestellte Oberflächenschicht aus Anatas kann durch eine Photoaktivierung mittels UV-Licht (etwa "Blacklight Blue") im UVA-Bereich unmittelbar vor der Implantation zeitlich begrenzt superhydrophil gemacht werden. Damit können unmittelbar vor der Implantation Initialeffekte an der Grenzfläche Implantat/Knochengewebe zur besseren und schnelleren Anlagerung von Knochengewebe an die Implantat-Oberfläche initiiert werden, wodurch sich eine besonders gute Osseointegration ergibt.

## Patentansprüche

1. Enossales Implantat, mit einem Basiskörper aus einem Basiswerkstoff, der einen Verankerungsbereich (12) zur Verankerung im Knochen, einen Halsbereich (14) und einen Aufbaubereich (16) zur Aufnahme eines zu applizierenden Elementes aufweist, wobei die Oberfläche des Verankerungsbereichs (12) eine Zwischenschicht (26) aus Titan und eine Oberflächenschicht (28) aus Titandioxid in der Modifikation Anatas aufweist, wobei der Halsbereich (14) eine andere Oberfläche als der Verankerungsbereich (12) aufweist, **dadurch gekennzeichnet, dass** die Zwischenschicht (26) als Sputterschicht aus Reintitan ausgebildet ist, um eine gute Haftung auf dem Basiswerkstoff zu erreichen, und die Oberflächenschicht (28) des Verankerungsbereichs (12) eine photoaktivierbare, nanokristalline Anatas-Schicht ist, wobei die Oberflächenschicht (28) des Verankerungsbereichs (12) als gesputterte Anatas-Schicht ausgebildet ist, um eine gute Haftung und Reinheit zu erhalten.

2. Implantat nach Anspruch 1, bei dem der Halsbereich (14) unbeschichtet ist.

3. Implantat nach Anspruch 1, bei dem der Halsbereich (14) eine Zwischenschicht (26) aus Titan und eine Oberflächenschicht (30) aus Titandioxid in der Modifikation Rutil aufweist.

4. Implantat nach einem der vorhergehenden Ansprüche, bei dem der Aufbaubereich (16) unbeschichtet ist.

5. Implantat nach einem der Ansprüche 1 bis 3, bei dem der Aufbaubereich (16) eine Zwischenschicht (26) aus Titan und eine Oberflächenschicht (30) aus Titandioxid in der Modifikation Rutil aufweist.

6. Implantat nach einem der vorhergehenden Ansprüche, bei dem der Basiswerkstoff Titan oder eine Titanlegierung ist.

7. Implantat nach einem der Ansprüche 1 bis 5, bei dem der Basiswerkstoff aus einem Kunststoff oder einer Keramik, insbesondere aus einem Zirkonoxidwerkstoff oder aus einem Aluminiumoxidwerkstoff, besteht.

8. Implantat nach einem der vorhergehenden Ansprüche, bei dem die Zwischenschicht (26) eine Schichtdicke zwischen 10 nm und 2000 nm, vorzugsweise zwischen 100 und 1000 nm, besonders bevorzugt zwischen 200 und 500 nm aufweist.

9. Implantat nach einem der vorhergehenden Ansprüche, bei dem die Oberflächenschicht (28) aus Anatas eine Schichtdicke zwischen 10 und 1000 nm, vorzugsweise zwischen 100 und 250 nm aufweist.

10. Implantat nach einem der Ansprüche 3 bis 9, bei dem die Oberflächenschicht (30) aus Rutil eine Schichtdicke zwischen 10 und 1000 nm, vorzugsweise zwischen 100 und 250 nm aufweist.

11. Verfahren zum Herstellen eines enossalen Implantats mit folgenden Schritten:
- Bereitstellen eines Basiskörpers in Form eines enossalen Implantats (10), das einen Verankerungsbereich (12) zur Verankerung im Knochen (22), einen Halsbereich (14) und einen Aufbaubereich (16) zur Aufnahme eines zu applizierenden Elementes aufweist;
- Plasmavorbehandeln des Basiskörpers zumindest im Verankerungsbereich (12),
- Sputtern einer Zwischenschicht (26) aus Reintitan,
- Sputtern einer photoaktivierbaren, nanokristallinen Oberflächenschicht (28) aus Titandioxid, die überwiegend, vorzugsweise vollständig, aus der Modifikation Anatas besteht, auf die Zwischenschicht im Verankerungsbereich (12), um eine gute Haftung und Reinheit zu erhalten,
- Sputtern einer Oberflächenschicht (30) aus Titandioxid, die überwiegend, vorzugsweise vollständig, aus der Modifikation Rutil besteht, zumindest auf den Halsbereich (14) und Ausgestaltung der Oberflächenschicht im Halsbereich mit einer anderen Oberfläche als der Verankerungsbereich (12) sie aufweist.

12. Verfahren nach Anspruch 11, bei dem der Schritt des Plasmavorbehandelns eine Plasmaoberflächenreinigung und eine Plasmapolitur umfasst.

13. Verfahren nach Anspruch 11 oder 12, mit dem zusätzlichen Schritt:
- Plasmavorbehandeln des Basiskörpers im Halsbereich (14).

14. Verfahren nach einem der Ansprüche 11 bis 13, mit den zusätzlichen Schritten:
- Plasmavorbehandeln des Basiskörpers im Aufbaubereich (16) und
- Sputtern einer Oberflächenschicht (30) aus Titandioxid, die überwiegend, vorzugsweise vollständig, aus der Modifikation Rutil besteht, auf den Aufbaubereich (16).

15. Verfahren nach einem der Ansprüche 11 bis 14, bei dem die Schichten (26, 28, 30) durch einen gepulsten, reaktiven Magnetronsputterprozess (reactive Pulse Magnetron Sputtering PMS) aufgebracht werden.

16. Verfahren nach einem der Ansprüche 11 bis 15, bei dem ein Basiskörper verwendet wird, der aus Titan oder einer Titanlegierung, aus Kunststoff oder aus einer Keramik, insbesondere aus einem Zirkonoxidwerkstoff oder einem Aluminiumoxidwerkstoff besteht.

## Claims

1. An endosseous implant, with a base body made from a base material, which has an anchoring area (12) for anchoring in the bone, a neck area (14) and an attachment area (16) for receiving an element to be applied, wherein the surface of the anchoring area (12) has an intermediate layer (26) made of titanium and a surface layer (28) made of titanium dioxide in the anatase modification, wherein the neck area (14) has a different surface than the anchoring area (12), **characterized in that** the intermediate layer (26) is made as a sputtered layer of pure titanium, in order to attain a good adhesion on the base material, and the surface layer (28) of the anchoring area (12) is a photoactivatable, nanocrystalline anatase layer, wherein the surface layer (28) of the anchoring area (12) is designed as a sputtered anatase layer, in order to obtain good adhesion and purity.

2. An implant according to claim 1, in which the neck area (14) is uncoated.

3. An implant according to claim 1, in which the neck area (14) has an intermediate layer (26) made of titanium and a surface layer (30) made of titanium dioxide in the rutile modification.

4. An implant according to one of the preceding claims, in which the attachment area (16) is uncoated.

5. An implant according to one of claims 1 to 3, in which the attachment area (16) has an Intermediate layer (26) made of titanium and a surface layer (30) made of titanium dioxide in the rutile modification.

6. An implant according to one of the preceding claims, in which the base material is titanium or a titanium alloy.

7. An implant according to one of claims 1 to 5, in which the base material consists of a plastic or a ceramic, particularly of a zirconium oxide material or of an aluminum oxide material.

8. An implant according to one of the preceding claims, in which the intermediate layer (26) has a layer thickness between 10 nm and 2000 nm, preferably between 100 and 1000 nm, particularly preferred between 200 and 500 nm.

9. An implant according to one of the preceding claims, in which the surface layer (28) made of anatase has a layer thickness between 10 and 1000 nm, preferably between 100 and 250 nm.

10. An implant according to one of claims 3 to 9, in which the surface layer (30) made of rutile has a layer thickness between 10 and 1000 nm, preferably between 100 and 250 nm.

11. A method for producing an endosseous implant having the following steps:
- provision of a base body in the form of an endosseous implant (10), which has an anchoring area (12) for anchoring in the bone (22), a neck area (14) and an attachment area (16) for receiving an element to be applied;
- plasma pretreatment of the base body at least in the anchoring area (12),
- sputtering of an intermediate layer (26) made of pure titanium,
- sputtering of a photoactivatable, nanocrystalline surface layer (28) made of titanium dioxide, which consists predominantly, preferably completely, of the anatase modification on the intermediate layer in the anchoring area (12), in order to obtain good adhesion and purity,
- sputtering of a surface layer 30) made of titanium dioxide, which consists predominantly, preferably completely, of the rutile modification, at least on the neck area (14) and design of the surface layer in the neck area with a different surface than it has in the anchoring area (12).

12. A method according to claim 11, in which the step of the plasma pretreatment comprises a plasma surface cleaning and a plasma polishing.

13. A method according to claim 11 or 12, with the additional steps:
- plasma pretreatment of the base body in the neck area (14).

14. A method according to one of claims 11 to 13, with the additional steps:
- plasma pretreatment of the base body in the attachment area (16) and
- sputtering of a surface layer (30) made of titanium dioxide, which consists predominantly, preferably completely, of the rutile modification, on the attachment area (16).

15. A method according to one of claims 11 to 14, in which the layers (26, 28, 30) are applied by a pulsed, reactive magnetron sputter process (reactive pulse magnetron sputtering PMS).

16. A method according to claims 11 to 15, in which a base body is used, which consists of titanium or a titanium alloy, of plastic or of a ceramic, particularly of a zirconium oxide material or an aluminum oxide material.

## Revendications

1. Implant intra-osseux, comprenant un corps de base constitué d'un matériau de base, qui comporte une partie d'ancrage (12) pour ancrer l'implant dans l'os, une partie de col (14) et une partie de structure (16) pour recevoir un élément à appliquer, dans lequel la surface de la partie d'ancrage (12) comprend une couche intermédiaire (26) en titane et une couche superficielle (28) de dioxyde de titane sous une forme d'anatase, et la partie de col (14) comprend une surface autre que la partie d'ancrage (12), **caractérisé en ce que** la couche intermédiaire (26) est formée d'une couche par pulvérisation cathodique en titane pur, pour obtenir une bonne adhérence sur le matériau de base, et la couche superficielle (28) de la partie d'ancrage (12) est une couche d'anatase nanocristalline, photo-activable, la couche superficielle (28) de la partie d'ancrage (12) étant formée d'une couche d'anatase pulvérisée pour obtenir une bonne adhérence et une bonne pureté.

2. Implant selon la revendication 1, dans lequel la partie de col (14) n'est pas revêtue.

3. Implant selon la revendication 1, dans lequel la partie de col (14) comprend une couche intermédiaire (26) de titane et une couche superficielle (30) de dioxyde de titane sous une forme rutile.

4. Implant selon l'une quelconque des revendications précédentes, dans lequel la partie de structure (16) n'est pas revêtue.

5. Implant selon l'une quelconque des revendications 1 à 3, dans lequel la partie de structure (16) comprend une couche intermédiaire (26) en titane et une couche superficielle (30) de dioxyde de titane sous une forme rutile.

6. Implant selon l'une quelconque des revendications précédentes, dans lequel le matériau de base est du titane ou un alliage de titane.

7. Implant selon l'une quelconque des revendications 1 à 5, dans lequel le matériau de base est constitué d'une matière plastique ou d'une céramique, notamment d'un matériau d'oxyde de zirconium ou d'un matériau d'oxyde d'aluminium.

8. Implant selon l'une quelconque des revendications précédentes, dans lequel la couche intermédiaire (26) a une épaisseur entre 10 et 2000 nm, de préférence entre 100 et 1000 nm et de manière plus préférée entre 200 et 500 nm.

9. Implant selon l'une quelconque des revendications précédentes, dans lequel la couche superficielle (28) d'anatase a une épaisseur entre 10 et 1000 nm, de préférence entre 100 et 250 nm.

10. Implant selon l'une quelconque des revendications 3 à 9, dans lequel la couche superficielle (30) de rutile a une épaisseur entre 10 et 1000 nm, de préférence entre 100 et 250 nm.

11. Procédé de fabrication d'un implant intra-osseux comprenant les étapes suivantes :
- fourniture d'un corps de base sous forme d'un implant intra-osseux (10) qui comprend une partie d'ancrage (12) pour ancrer l'implant dans l'os (22), une partie de col (14) et une partie de structure (16) pour recevoir un élément à appliquer,
- pré-traitement par plasma du corps de base au moins dans la partie d'ancrage (12),
- pulvérisation cathodique d'une couche intermédiaire (26) en titane pur,
- pulvérisation cathodique d'une couche superficielle (28) nanocristalline photo-activable de dioxyde de titane, qui est composée principalement, de préférence entièrement, d'une forme anatase, sur la couche intermédiaire dans la partie d'ancrage (12), pour obtenir une bonne adhésion et une bonne pureté,
- pulvérisation cathodique d'une couche superficielle (30) de dioxyde de titane, qui est composée principalement, de préférence entièrement, de forme rutile, au moins sur la partie de col (14) et agencement de la couche superficielle dans la partie de col avec une surface autre que celle de la partie d'ancrage (12).

12. Procédé selon la revendication 11, dans lequel l'étape de pré-traitement par plasma comprend un nettoyage de surface par plasma et un polissage par plasma.

13. Procédé selon la revendication 11 ou 12, comportant l'étape additionnelle suivante :
- pré-traitement par plasma du corps de base dans la partie de col (14).

14. Procédé selon l'une quelconque des revendications 11 à 13, comprenant les étapes additionnelles suivantes :
- pré-traitement par plasma du corps de base dans la partie de structure (16), et
- pulvérisation cathodique d'une couche superficielle (30) de dioxyde de titane, qui est composée principalement, de préférence entièrement, d'une forme rutile, sur la partie de structure (16).

15. Procédé selon l'une quelconque des revendications 11 à 14, dans lequel les couches (26, 28, 30) sont appliquées par un procédé de pulvérisation pulsée réactive avec magnétron (PMS).

16. Procédé selon l'une quelconque des revendications 11 à 15, dans lequel le corps de base utilisé est constitué de titane ou d'un alliage de titane, d'une matière plastique ou d'une céramique, notamment d'un matériau d'oxyde de zirconium ou d'un matériau d'oxyde d'aluminium.
